# EUROPEAN PATENT SPECIFICATION

(11) **EP 4 066 988 B1**
(45) Date of publication and mention of the grant of the patent: **01.11.2023**
(21) Application number: 22163671.5
(22) Date of filing: 22.03.2022
(51) Int. Cl.: B23Q 1/03

(54) **WORKPIECE LOCKING SYSTEM**
WERKSTÜCKVERRIEGELUNGSSYSTEM
SYSTÈME DE VERROUILLAGE DE PIÈCE À USINER

(30) Priority: 01.04.2021 IT 202100008150
(43) Date of publication of application: 05.10.2022
(73) Proprietor: C.M.S. S.p.A., 24019 Zogno (BG) (IT)
(72) Inventor: RATTI, Federico, 24040 Bonate di Sopra (BG) (IT)
(74) Representative: Luppi Intellectual Property S.r.l.

(56) References cited:
- EP-A1- 3 718 687
- WO-A1-2015/019210
- US-A- 4 684 113

## Description

### Background to the invention

The invention relates to a workpiece locking system for locking a workpiece being machined, in particular for a numerically controlled machining centre.

Workpiece locking systems for locking a workpiece being machined are known that are to be used in particular in a machining centre. Specifically, workpiece locking systems are known that enable a workpiece being machined to be locked by locking members, in general of the suction cup type, taken to the top of vertically positionable vertical rods that are independent of one another to lock a surface of the workpiece being machined. Such known workpiece locking systems in fact enable workpieces with a flat surface or also workpieces with a complex shape, for example a surface with a double curvature, to be locked. Patent publication WO 2015/019210 A1 discloses an example of such a workpiece locking system, which forms the basis of the preamble of appended claim 1.

One of the problems of known workpiece locking systems is to perform a machining task by a tool without any interference between the tool, which operates above the workpiece, and the locking members, which maintain the workpiece locked from below. In order to prevent this interference, for example in the case of drilling tools that have to perform a machining task on a locking member, it is known to momentaneously lower the locking member that interacts with the part of the workpiece that has to be machined. The control system drives in descent the support rod of the specific locking member by a minimum stroke necessary for avoiding interference and, after performance of the machining task, drives the reascent of the support rod so that the locking member returns to grip the workpiece. During the machining step, in which the locking member is freed from the workpiece, the latter remains locked in position owing to the other locking members of the workpiece locking system.

Workpiece locking systems like those that have just been disclosed nevertheless have some limits and drawbacks, in particular linked to the release step of one of the rods to perform specific machining tasks on the workpiece and to the structural part of the workpiece locking system that permits the aforesaid release step.

The structural part that permits the release step, specifically the mechanisms that enable each locking member to be lowered temporarily by a limited stroke from the work height and the locking member to be returned to the work height is particularly complex and costly.

### Summary of the invention

One object of the invention is to provide a workpiece locking system, which is alternative to those known, for locking a workpiece being machined.

One object of the invention is to devise a workpiece locking system that is able to overcome one or more of the aforesaid drawbacks of the prior art.

One advantage is to make available a workpiece locking system that is constructionally and functionally simple and cheap.

One advantage is to devise a workpiece locking system that enables machining tasks to be performed on a workpiece by a tool without damaging either the tool or the workpiece locking system or parts thereof.

One advantage is to provide a workpiece locking system that is usable in a machining centre, in particular a numerically controlled machining centre.

One advantage is to enable a workpiece of regular shape, for example a workpiece having a flat surface, to be locked, just like a workpiece of complex shape, for example having a surface with a double curve.

Such objects and advantages and still others are achieved by a workpiece locking system according to one or more of the claims set out below.

In one embodiment, a workpiece locking system comprises at least two vertically movable rods, each provided with at least one locking member to lock a workpiece to be machined and with a base on which holes are obtained to enable the rods to be slid vertically, in which for each rod a movable element is provided that is able to adopt at least one lower position inside a housing obtained in the aforesaid base, a brake for locking the respective rod with respect to the respective movable element, and pneumatic driving means configured to control the brake and the position of the movable element.

In particular, the pneumatic driving means may vary the position of each rod according to the operating step by varying the pressure value of the operating gas applied by the pneumatic driving means. More in particular, the pneumatic driving means may be configured so as to vary the pressure of the operating gas with at least three pressure values. A first pressure value may be applied to configure the brake in an inactive configuration, i.e. such that the respective rod is released from the respective movable element to be movable vertically both with respect to the base of the workpiece locking system and with respect to the respective movable element. A second pressure value may be applied to configure the brake in active configuration and the respective movable element in the upper position, so that the locking member arranged on the respective rod is positioned at a desired machining height so as to lock the workpiece being machined. A third pressure value may be applied to configure the brake in active configuration and the movable element in the lower position, so that the locking member arranged on the respective rod moves to a lower height than the aforesaid machining height in order to enable a tool to perform a machining task on the workpiece without interference with the respective locking member.

In one embodiment, a workpiece locking system comprises a plurality of locking members each of which is carried by a rod that is movable vertically with respect to a respective slider that is in turn movable between an upper position and a lower position, each rod being provided with a brake for locking the rod with respect to the respective slider, the aforesaid slider and the aforesaid brake being controlled by the application of at least three pressure values of a pneumatic drive, in which a first pressure value permits a movement of the rod with respect to the slider to reach a desired position of the locking member, a second pressure value enables the rod to be locked on the slider with the slider in the upper position to maintain the locking member in the desired position, and a third pressure value enables the slider to be lowered maintaining the rod locked on the slider to lower the locking member and enable a tool to perform a machining task on the workpiece without interfering with the locking member.

### Brief description of the drawings

The invention can be understood better and actuated with reference to the accompanying drawings that illustrate embodiments thereof by way of non-limiting example of actuation, in which:
Figure 1 is a view in a vertical elevation of a workpiece locking system made according to the invention in a first operating configuration;
Figures 2 and 3 are the views of the workpiece locking system of Figure 1 in two operating configurations;
Figure 4 is a top view of the workpiece locking system of Figure 1;
Figure 5 is a schematic view of the workpiece locking system of Figure 1 with the locking members that lock a workpiece being machined;
Figure 6 is a schematic view in a vertical elevation of a detail of the workpiece locking system of Figure 5, in a release step of a first locking member from the workpiece to enable a tool to perform a machining task on the workpiece without interfering with the first locking member;
Figure 7 is the view of Figure 6, in a release step of a second locking member from the workpiece to enable the tool to perform a machining task on the workpiece without interfering with the second locking member;
Figure 8 is an enlarged view in a vertical elevation of a detail of the workpiece locking system of Figure 1, which shows three vertical rods in three different operating configurations associated with three respective different pressure values of the operating gas of the pneumatic driving means;
Figure 9 is an enlarged detail of Figure 8.

### Detailed description

1 indicates a workpiece locking system for locking a workpiece being machined that is usable, in particular, in a numerically controlled machining centre.

The workpiece locking system 1 comprises at least two vertically movable rods 2, each of which is provided with at least one locking member 3 to lock a workpiece 4 being machined. Each rod may have a circular, or polygonal section (for example square or hexagonal), or other section. The workpiece locking system 1 may comprise, in particular, as in the specific embodiment, a multiplicity (for example in the order of a few hundred) of locking members 3.

The workpiece locking system 1 has the workpiece 4 being machined locked by the plurality of locking members 3. In one particular operating step, which will be illustrated below, the workpiece locking system 1 may release one of the blocking members 3 from the workpiece 4 to perform a machining task with a tool 30 at said released locking member 3, whilst the workpiece 4 remains locked in the machining position by the other locking members 3.

Each locking member 3, in particular, is arranged at an upper end of the respective rod 2. Each locking member 3 may comprise, in particular, a suction locking member, in particular a suction cup, in particular a bellows suction cup, or another type of locking member that is suitable for locking a workpiece being machined.

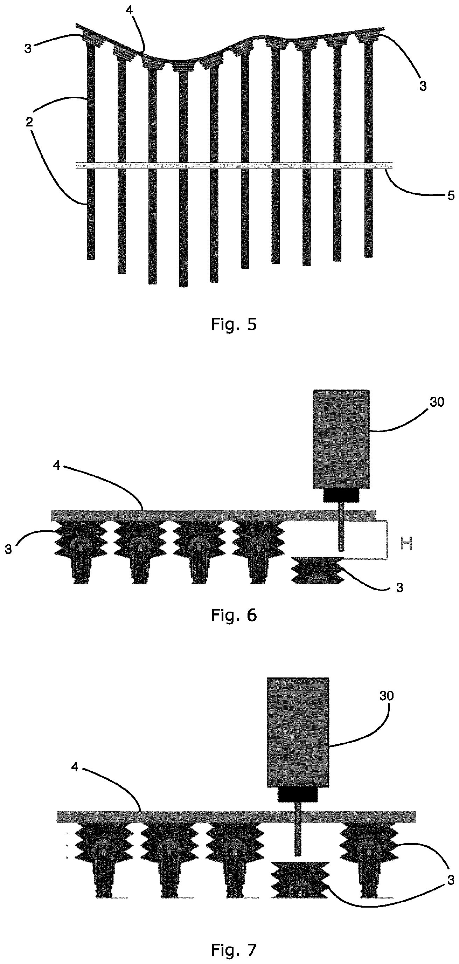

Each locking member 3 may be of the fixed orientation type, in particular to lock workpieces being machined of regular shape, for example workpieces having a flat surface. Alternatively, the locking members 3 may be orientable in space so as to be able to lock possibly also workpieces being machined of complex shape, for example workpieces having a double curved surface, as shown in Figure 5.

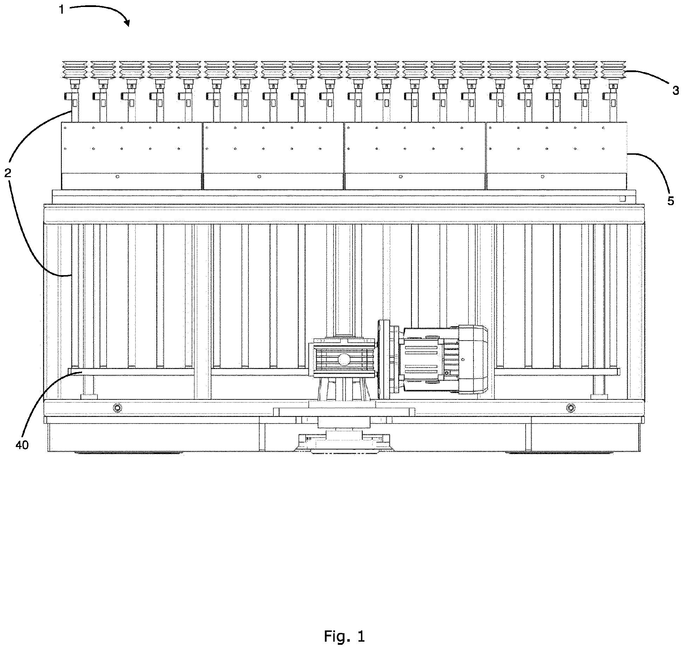

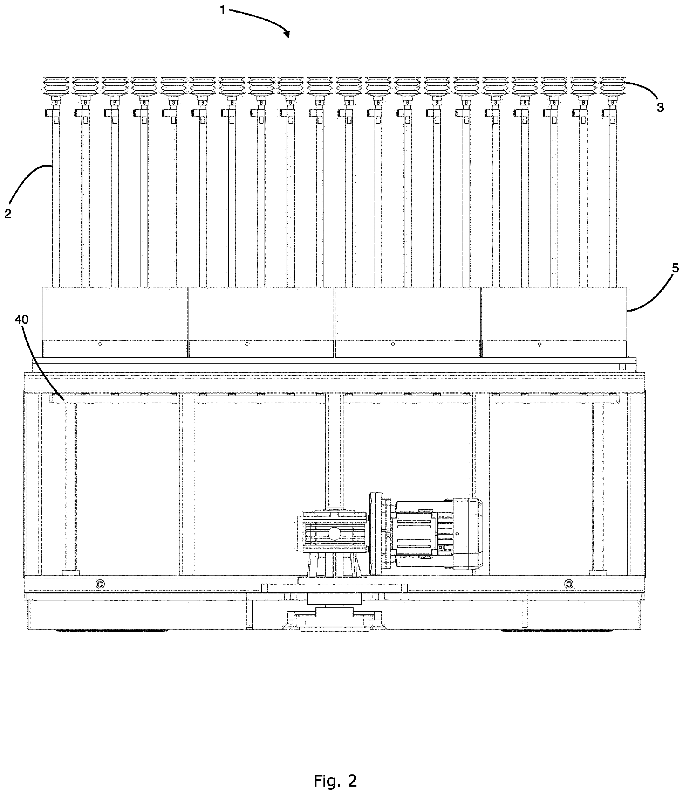

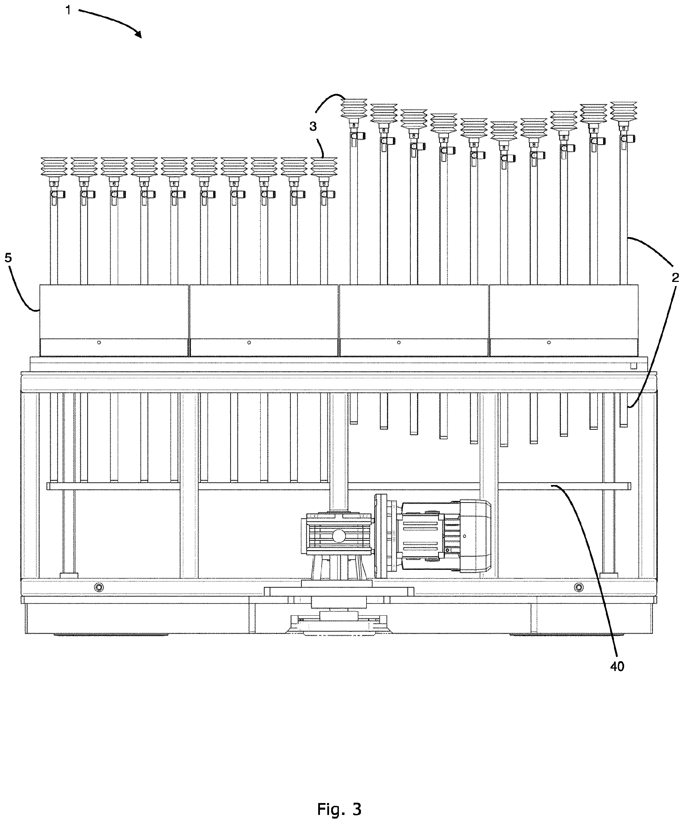

The workpiece locking system 1 may comprise, in particular, a base 5. In the base 5, holes 6 may be obtained within each of which a respective rod 2 may be obtained with the possibility of a vertical movement. In the lower part of the base 5, it is possible, in particular, for other holes 6A to be obtained that are substantially coaxial with the holes 6 to permit vertical movement of each rod 2. Each rod 2 is thus movable vertically with respect to the base 5, as shown in Figures 1-3. The holes 6, 6A may have, in particular, a circular or square shape, or other suitable shape to enable each rod to slide through. In an intermediate region between the holes 6 and 6A of the base 5, at each rod 2 a housing 8 is obtained that may be also be traversed by the respective rod 2.

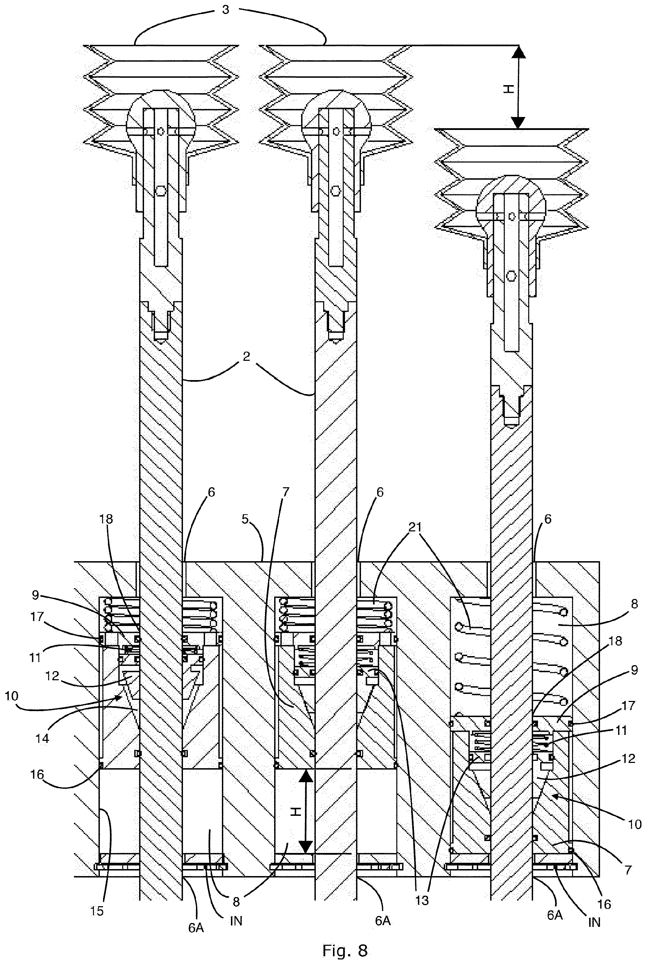

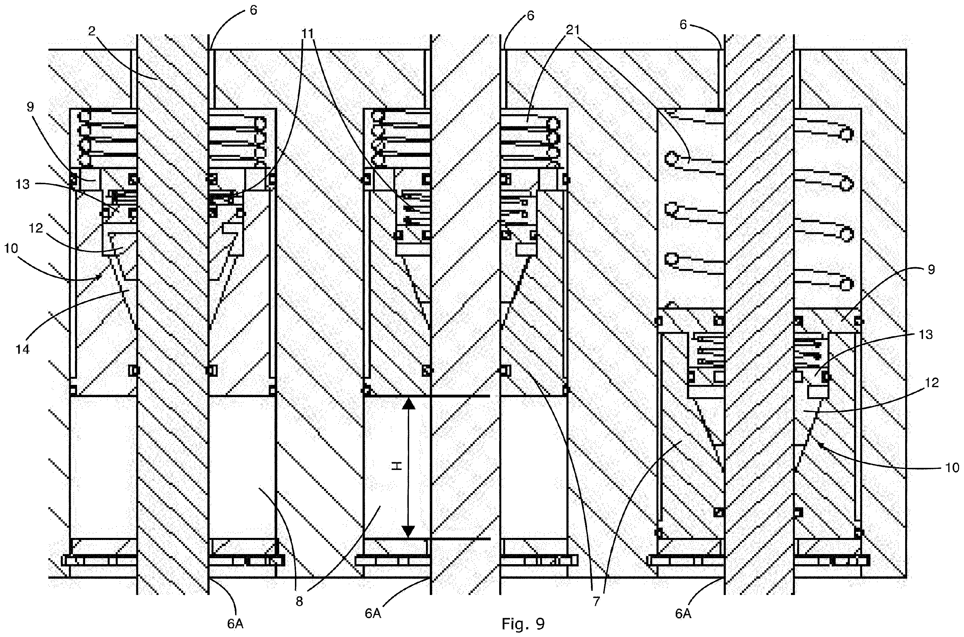

The workpiece locking system 1 may comprise, for each rod 2, a movable element, also called a slider 7, which is also movable vertically with respect to the base 5. More in particular, each slider 7 is movable vertically with a limited H stroke or portion (for example just a few centimetres) so as to adopt two positions, an upper position (shown to the left or in the centre in Figures 8 and 9) and a lower position (shown on the right in Figures 8 and 9), inside the respective housing 8 obtained in the base 5. Each slider 7 may comprise, in particular, a central internal cavity 14 through which the respective rod 2 passes. Each slider 7 may comprise, in particular, a vertically movable plunger 9. Each plunger 9 may comprise, in particular, a central hole 18 through which the respective rod 2 passes.

Inside the housing 8, second elastic means 21 is further arranged. The second elastic means 21 may be, in particular, connected below to an upper part of the slider 7. More precisely, the second elastic means 21 is connected below to an upper part of the plunger 9, which is integral with the slider 7.

The slider 7 interacts with a lateral surface 15 of the housing 8 via a seal element 16, for example a rubber washer. The seal element 16 may be arranged, in particular, in a lower part of a lateral surface of the slider 7. The plunger 9 interacts with the lateral surface 15 of the housing 8 by a further seal element 17, for example a rubber washer. The seal elements 16 and 17 enable the slider 7 and the plunger 9 to move vertically integrally between the upper position and the lower position inside the housing 8.

For each rod 2, a brake 10 may can be provided in particular. The brake 10 may comprise, in particular, another plunger 13, which is also movable vertically, arranged in the cavity 14 inside the slider 7. The brake 10 may comprise, in particular, a wedge-shaped element 12, arranged in the inner cavity 14, and movable vertically between a non-contact position (shown on the right in Figures 8 and 9) and a contact position (shown in the centre in Figures 8 and 9) integrally with the other plunger 13. Inside the inner cavity 14, first elastic means 11 is further arranged that is connected below to the top of the other plunger 13.

The brake 10 may be, in particular, configured to adopt at least one inactive configuration and at least one active configuration.

In particular, in the inactive configuration of the brake 10, the respective rod 2 may be released from the respective slider 7 so as to be able to slide vertically both with respect to the base 5 and with respect to the respective slider 7.

In the active configuration of the brake 10 on the other hand, the respective rod 2 may be locked on the respective slider 7.

Each rod 2 of the workpiece locking system 1 may comprise pneumatic driving means operating with a pressurized gas (for example air). The pneumatic driving means may comprise, in particular, at least one inlet IN for feeding the pressurized gas to the housing 8 on at least one side of the respective slider 7 and on at least one side of the respective brake 10.

The pneumatic driving means of the workpiece locking system 1 may be configured, in particular, to control at least one configuration of the respective brake 10 between the active and inactive configurations, and to control at least one position of the respective slider 7 between the upper and lower positions.

The workpiece locking system 1 may comprise, in particular, at least one positioning table 40, arranged below the rods 2, which is suitable for positioning the locking members 3 at the corresponding machining height.

The workpiece locking system may comprise control means (not shown), for example of electronic and programmable type, configured to enable the pneumatic driving means to check the aforesaid configurations of the respective brake and the aforesaid positions of the respective slider.

The control means is further configured to move vertically the positioning table 40, in particular to raise the positioning table 40 to an upper vertical height, so as to push the rods 2 upwards.

The control means is also configured, once said upper vertical height is reached, to lower the aforesaid positioning table 40 from said upper vertical height.

Lastly, during the preceding lowering operation, the control means is configured to lock selectively each rod 2 once said machining height has been reached, by actuating the respective brake 10.

The pneumatic driving means may be configured, in particular, so as to apply a first pressure value (for example 8 ± 2 bar) of the operating gas to configure the respective brake 10 in the inactive configuration, exerting a force opposing the first elastic means 11 (and also opposing the second elastic means 21), so that the respective slider 7 is in the upper position.

The pneumatic driving means may be configured, in particular, so as to apply a second pressure value (for example 3 ± 2 bar) of the operating gas to configure the respective brake 10 in the active configuration (so the force exerted by the first elastic means 11 is greater than the force exerted by the pressurized gas), with the respective slider 7 in the upper position, as the force exerted by the second elastic means 21 is still less than the force exerted by the pressurized gas.

The pneumatic driving means may be configured, in particular, so as to apply a third pressure value (for example the atmospheric pressure) of the operating gas to move the respective movable element 7 to the lower position through the effect of the force exerted by the second elastic means 21, the respective brake 10 remaining in an active locking configuration.

In particular, the first pressure value may be greater than the second pressure value and the third pressure value. In particular, the second pressure value may be an intermediate value between the first pressure value and the third pressure value, in particular less than the first pressure value and greater than the third pressure value. In particular, the third pressure value may be less than the first pressure value and the second pressure value. For example, the first pressure value may be about 8 bar, the second pressure value may be about 3 bar and the third pressure value may be equal to atmospheric pressure.

Figures 8 and 9 enable the different configurations of the brake 10 and the positions adopted by the movable element 7 to be displayed better in function of the pressure value of the gas applied by the pneumatic driving means of each rod 2.

On the left, in both Figures 8 and 9, the case is shown in which the pneumatic driving means applies the first pressure value (the greater value). When the first pressure value is applied, a pneumatic force is exerted that is such as to compress the first elastic means 11 and the second elastic means 21 present inside the housing 8. As a result, when the first pressure value of the gas is applied by the pneumatic driving means, the plunger 9 and the slider 7 move to the upper position. Simultaneously, the other plunger 13 and the wedge-shaped element 12 move to a non-contact position. This configuration corresponds to an inactive configuration of the brake 10. In this case, the respective rod 2 is free to move vertically with respect to the base 5 and to the respective slider 7.

In the centre, in both Figures 8 and 9, the case is shown in which the pneumatic driving means applies the second pressure value. When the second pressure value, in particular less than the first pressure value, is applied, a force is exerted that compresses the second elastic means 21 but does not succeed in compressing the first elastic means 11. As a result, when the second pressure value of the gas is applied, the plunger 9 and the slider 7 remain in the upper position. Simultaneously, the other plunger 13 and the wedge-shaped element 12 go to the contact position through the effect of a first elastic force exerted by the first elastic means 11 opposing the force exerted by the second pressure value. The first elastic force is less than the force exerted by the first pressure value, nevertheless, the first elastic force is greater than the force exerted by the second pressure value. This configuration corresponds to an active configuration of the brake 10, because the wedge-shaped element 12 comes to abut against the respective rod 2, locking the vertical movement thereof with respect to the slider 7. In this situation, the locking member 3 of the respective rod 2 is fixed in a position that may coincide, in particular, with the desired work position. The first elastic means 11 maintains the wedge-shaped element 12 abutting against the respective rod 2 until the respective pneumatic driving means again applies the first pressure value of the gas to the housing 8 of the respective rod 2.

On the right, in both Figures 8 and 9, the case is shown in which the pneumatic driving means applies the third pressure value. When the third pressure value, less than the first pressure value and the second pressure value, is applied, a force is exerted that is not able to compress either the first elastic means 11, or the second elastic means 21. As a result, when the third pressure value of the gas is applied, the plunger 9 and the slider 7 go to the lower position, through the effect of the second elastic force exerted by the second elastic means 21 opposing the force (for example nil) exerted by the third pressure value. The second elastic force is less than the forces exerted by the first pressure value and the second pressure value, nevertheless the second elastic force is greater than the force exerted by the third pressure value. Simultaneously, the other plunger 13 and the wedge-shaped element 12 remain in the contact position through the effect of the first elastic force exerted by the first elastic means 11 opposing the force (for example nil) exerted by the third pressure value. Also in this case, the brake 10 is in an active configuration, because the wedge-shaped element 12 comes to abut against the respective rod 2, locking the vertical movement thereof with respect to the respective slider 7. The first elastic means 11 maintains the wedge-shaped element 12 abutting against the respective rod 2 until the respective pneumatic driving means again applies the first pressure value of the gas to the housing 8 of the respective rod 2.

When the brake is configured in an inactive configuration, the respective rod 2 is free to move vertically with respect to the base 5 and to the respective slider 7. In this manner, it is possible to vary the height at which the locking member 3 of the respective rod 2 is located in order to reach the desired machining height.

When the brake is configured in active configuration, the respective rod 2 is locked with respect to the respective slider 7, which can so move to the upper position that the respective locking member 3 arranged on the respective rod 2 can be positioned at the desired machining height to lock the workpiece 4 being machined. In this case, the rod 2 is locked and the respective locking member 3 is constrained on the workpiece 4 being machined.

When the brake is configured in active configuration but the third pressure valve is applied, the respective rod 2 is locked with respect to the respective slider 7, which however moves to the lower position so that the respective locking member 3 arranged on the respective rod 2 can be positioned at a lower height than the machining height. In this case, the rod moves vertically downwards with respect to the base 5 and, consequently, the respective locking member 3 is released from the workpiece 4 being machined. In particular, the rod 2 moves vertically downwards by a portion H to enable a tool 30 to perform a machining task on the workpiece 4 being machined without interference occurring with the respective locking member 3.

The portion H may be the same as the height difference between the upper position and the lower position 7, which are respectively adopted when the first (or the second) pressure value and the third pressure value of the gas are applied to the housing 8 of the respective rod 2. For example, the portion H could be, in particular, about 30 ± 10 mm.

Once machining with the tool 30 on the workpiece 4 has terminated at a determined locking member 3, it is possible to return the respective rod 2 to the aforesaid machining height simply by again applying the second pressure value of the gas to the housing 8 of the respective rod 2 by the pneumatic driving means.

If it is necessary to enable the tool 30 to perform the aforesaid machining task on the workpiece 4 at another locking member 3, it is necessary to apply the third pressure value of the gas to the housing 8 of the respective rod 2. In this manner, the rod 2 moves vertically down the aforesaid portion H, releasing the respective locking member 3 from the workpiece 4 being machined and enabling the tool 30 to perform the aforesaid machining task without interference with the aforesaid locking member 3.

One advantage of the workpiece locking system is the possibility of controlling the pneumatic driving means of the rods 2 such that, when a tool has to perform a machining task on the workpiece 4 at one of the aforesaid rods 2, the respective pneumatic driving means is able to apply the third pressure value so that the respective locking member 3 is lowered with respect to the machining height thereof and the tool can thus perform the machining task without interference with the respective locking member 3. Simultaneously, the pneumatic driving means of the remaining rod/s applies the second pressure value so that the respective locking member 3 is positioned on the work height thereof to continue to lock the workpiece 4 being machined.

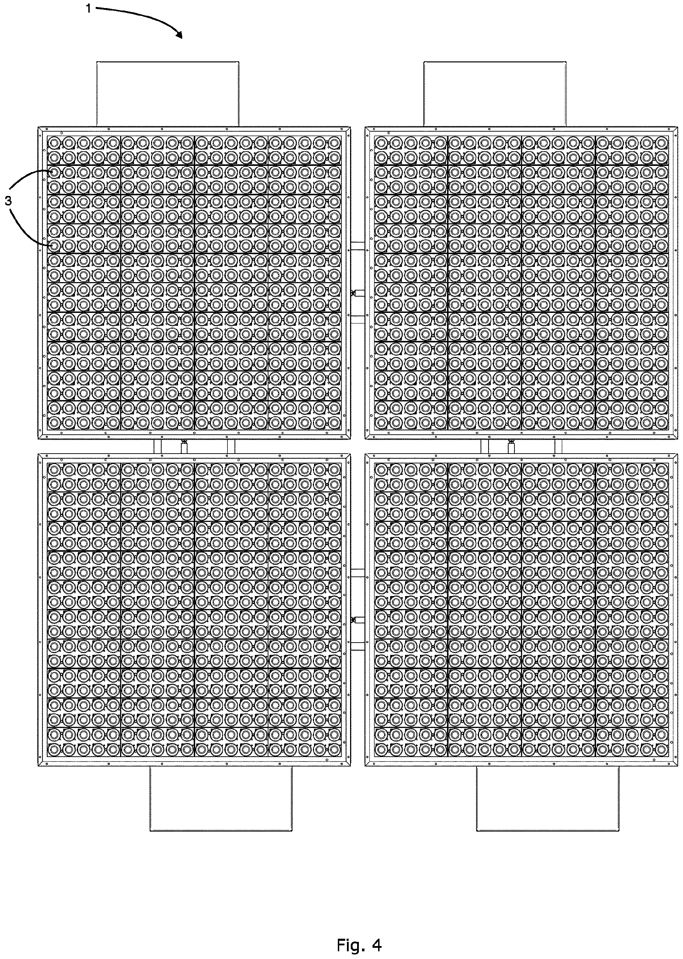

The workpiece locking system 1 may have more than two rods 2 next to one another along a direction, as shown in Figures 1-3. The workpiece locking system 1 may further provide more than two rods 2 next to one another along two directions, possibly along two directions that are orthogonal to one another, as shown in Figure 4.

## Claims

1. Workpiece locking system (1) for locking a workpiece (4) being machined, usable in
particular in a machining centre, said workpiece locking system (1) comprising a base (5)
and two or more vertical rods (2), each of said two or more rods being vertically movable with respect to said base (5), said workpiece locking system (1) comprising, for
each of said two or more rods (2):
- a locking member (3) arranged on the respective rod (2) for locking a workpiece (4) being machined;
**characterised in that** said workpiece locking system (1) further comprises, for each of said two or more rods (2):
- a slider (7) that is movable vertically with respect to said base (5) between at least an upper position and a lower position inside a respective housing (8) obtained in said base (5);
- a brake (10) configured to assume at least one active configuration, in which the respective rod (2) is locked to the respective slider (7) to be vertically movable together with the respective slider (7), and at least one inactive configuration, in which the respective rod (2) is unlocked from the respective slider (7) to be movable vertically both with respect to said base (5) and with respect to the respective slider (7);
- pneumatic actuation means with a pressurized gas configured to control at least one configuration of the respective brake (10) and one position of the respective slider (7) so that:
^{∗} at a first gas pressure value, the respective brake (10) is in said inactive configuration;
^{∗} at a second gas pressure value, the respective slider (7) is in said upper position and the respective brake (10) is in said active configuration, so that the respective locking member (3) arranged on the respective rod (2) can be positioned at a working height to lock the piece (4);
^{∗} at a third gas pressure value, the respective slider (7) is in said lower position and the respective brake (10) is in said active configuration, so that the respective locking member (3) arranged on the respective rod (2) can be positioned at a lower height than said working height to allow a tool (30) to perform a machining task on the piece (4) without interference with the respective locking member (3).

2. System according to claim 1, wherein said second pressure value is an intermediate value between said first pressure value and said third pressure value; said first pressure value being, in particular, greater than said second pressure value; said second pressure value being, in particular, greater than said third pressure value; said third pressure value being, in particular, atmospheric pressure.

3. System according to claim 1 or 2, wherein at said first gas pressure value said slider (7) is in said upper position.

4. System according to any one of the preceding claims, comprising control means configured to control said pneumatic actuation means of said two or more rods (2) so that, when a tool has to perform a machining task on the workpiece (4) at one of said two or more rods (2), the respective pneumatic actuation means operates at said third pressure value so that the respective locking member (3) is lowered with respect to its working height and the tool can thus perform the machining task without interference with the respective locking member (3), and so that, simultaneously, for the other said two or more rods (2), the respective pneumatic actuation means operates at said second pressure value so that the respective locking member (3) remains positioned at its working height to lock the workpiece (4).

5. System according to any one of the preceding claims, comprising at least one positioning table (40) arranged below said rods (2) to lift them, said control means being configured to position said locking members (3) at the corresponding work height through the steps of:
- raising said at least one positioning table (40) to an upper vertical height so as to push the rods upwards (2);
- once said upper vertical height has been reached, lowering said at least one positioning table (40) from said upper vertical height so that the rods (2) are also lowered;
- during the step of lowering, selectively locking each rod (2) by activating said brake (10) by applying said second pressure value.

6. System according to any one of the preceding claims, wherein said slider (7) comprises a plunger (9) movable vertically upon actuation of said pressurized gas and wherein said brake (10) comprises another plunger (13) movable vertically upon actuation of said pressurized gas; said another plunger being arranged, in particular, in a cavity (14) inside said slider (7).

7. System according to any one of the preceding claims, wherein said pneumatic actuation means comprises at least one inlet (IN) for feeding said pressurized gas into said housing (8) on at least one side of the respective slider (7) and on at least one side of the respective brake (10).

8. System according to any one of the preceding claims, wherein said brake (10) comprises first elastic means (11) configured to maintain said brake in said active configuration with a first elastic force in opposition to said pressurized gas, said first elastic force being less than a force exerted by said first pressure value and being greater than forces exerted by said second pressure value and said third pressure value.

9. System according to any one of the preceding claims, wherein said brake (10) comprises at least one wedge-shaped element (12) which, in said active configuration, abuts against said rod (2); said at least one wedge-shaped element (12) abutting, in particular, against said rod (2) by means of first elastic means (11).

10. System according to any one of the preceding claims, comprising, for each of said two or more rods (2), second elastic means (21) configured to keep the respective slider (7) in said lower position with a second elastic force in opposition to said pressurized gas, said second elastic force being lower than a force exerted by said first pressure value and a force exerted by said second pressure value and being higher than a force exerted by said third pressure value.

11. System according to any one of the preceding claims, wherein said locking member (3) comprises a suction locking member, in particular a suction cup.

12. Method of controlling a system according to any one of the preceding claims, said method comprising the steps of:
- vertically moving each of said rods (2);
- during said moving step, controlling said actuation means with said first gas pressure value so that each brake (10) is in said inactive configuration, so that each rod (2) is released by the respective slider (7) and it can move vertically both with respect to the base (5) and with respect to the respective slider (7);
- when, during said moving step, each rod (2) reaches a desired position, controlling said actuation means with said second gas pressure value so that the respective brake (10) is in said active configuration so that the respective rod (2) is locked and the respective slider (7) is in the upper position;
- when said rods (2) have reached the respective desired position, positioning the workpiece on said locking members (3) carried by the respective rods;
- if necessary, to allow a tool to perform a machining task on the workpiece (4) without interference with a specific locking member (3), controlling the actuation means associated with said specific locking member (3) with said third gas pressure value so that the respective slider (7) moves to the lower position, whereby the respective locking member (3) is lowered to avoid interference with said tool, and at the same time continuing to control the actuation means associated with the other locking member(s) (3) with said second pressure value, whereby the workpiece continues to be locked by the other locking member(s) (3).

13. Control method according to claim 12, comprising the steps of:
- raising at least one positioning table (40) to an upper vertical height so that said at least one positioning table (40) pushes the rods upwards (2);
- once said upper vertical height has been reached, lowering said at least one positioning table (40) from said upper vertical height so that the rods (2) are also lowered;
- during the step of lowering, selectively locking each rod (2) once said work height has been reached, each rod (2) being locked by activating said brake (10) by applying said second pressure value.

## Patentansprüche

1. Werkstückverriegelungssystem (1) zum Verriegeln eines zu bearbeitenden Werkstücks (4), verwendbar insbesondere in einem Bearbeitungszentrum, wobei das Werkstückverriegelungssystem (1) umfasst eine Basis (5)
und zwei oder mehr vertikale Stangen (2, wobei jede der zwei oder mehr Stangen vertikal in Bezug auf die Basis (5) beweglich sind, wobei das Werkstückverriegelungssystem (1) umfasst, für jede der zwei oder mehr Stangen (2):
ein an der jeweiligen Stange (2) angeordnetes Verriegelungselement (3) zum Verriegeln eines Werkstücks (4), das bearbeitet wird;
**dadurch gekennzeichnet, dass** das Werkstückverriegelungssystem (1) ferner für jede der zwei oder mehr Stangen (2) Folgendes umfasst
mehreren Stangen (2):
- einen Schieber (7), der vertikal in Bezug auf die Basis (5) zwischen mindestens einer oberen Position und einer unteren Position beweglich ist einer oberen Position und einer unteren Position innerhalb eines entsprechenden Gehäuses (8) die in der Basis (5) ausgebildet ist;
- eine Bremse (10), die so konfiguriert ist, dass sie mindestens eine aktive Konfiguration annimmt, in der die die jeweilige Stange (2) mit dem jeweiligen Schieber (7) verriegelt ist, um vertikal beweglich zu sein zusammen mit dem jeweiligen Schieber (7), und mindestens eine inaktive Konfiguration, in der in der die jeweilige Stange (2) von dem jeweiligen Schieber (7) entriegelt ist, um vertikal sowohl in Bezug auf die Basis (5) als auch in Bezug auf den jeweiligen Schieber (7) beweglich zu sein;
- pneumatische Betätigungsmittel mit einem unter Druck stehenden Gas, die so konfiguriert sind, dass sie mindestens eine Konfiguration der jeweiligen Bremse (10) und eine Position des jeweiligen Schiebers (7) zu steuern, so dass:
* bei einem ersten Gasdruckwert die jeweilige Bremse (10) sich in der genannten inaktiven Konfiguration befindet;
* bei einem zweiten Gasdruckwert der jeweilige Schieber (7) in der oberen Position und die jeweilige Bremse (10) in der aktiven Konfiguration ist, so dass das jeweilige Verriegelungselement (3), das an der jeweiligen Stange (2) angeordnet ist in einer Arbeitshöhe positioniert werden kann, um das Werkstück (4) zu verriegeln;
* bei einem dritten Gasdruckwert befindet sich der jeweilige Schieber (7) in der unteren Position und die jeweilige Bremse (10) ist in der aktiven Konfiguration, so dass das jeweilige Verriegelungselement (3), das an der jeweiligen Stange (2) angeordnet ist auf einer niedrigeren Höhe als der Arbeitshöhe positioniert werden kann, um es einem Werkzeug (30) zu ermöglichen, eine Bearbeitungsaufgabe an dem Werkstück (4) ohne Beeinträchtigung des dem jeweiligen Verriegelungselement (3) durchzuführen.

2. System nach Anspruch 1, wobei der zweite Druckwert ein Zwischenwert zwischen dem ersten Druckwert und dem dritten Druckwert ist; der erste Druckwert Wert insbesondere größer ist als der zweite Druckwert; der zweite Druck Wert insbesondere größer als der dritte Druckwert ist; wobei der dritte Druckwert insbesondere der atmosphärische Druck ist.

3. System nach Anspruch 1 oder 2, wobei bei dem ersten Gasdruckwert der Schieber (7) in der oberen Stellung ist.

4. System nach einem der vorhergehenden Ansprüche, mit einer Steuereinrichtung die so konfiguriert ist, dass sie die pneumatischen Betätigungsmittel der zwei oder mehr Stangen (2) steuert so dass, wenn ein Werkzeug eine Bearbeitungsaufgabe an dem Werkstück (4) an einer der zwei oder mehr Stangen (2) durchführen muss, das jeweilige pneumatische Betätigungsmittel mit dem dritten Druckwert operiert, so dass das jeweilige Verriegelungselement (3) in Bezug auf seine Arbeitshöhe abgesenkt wird und das Werkzeug somit die Bearbeitungsaufgabe ohne Beeinträchtigung des jeweiligen Verriegelungselements (3) durchführen kann, und so dass gleichzeitig für die anderen zwei oder mehr Stangen (2) das jeweilige pneumatische Betätigungsmittel mit dem zweiten Druckwert arbeitet, so dass das jeweilige Verriegelungselement (3) in seiner Arbeitshöhe positioniert bleibt Arbeitshöhe positioniert bleibt, um das Werkstück (4) zu verriegeln.

5. System nach einem der vorhergehenden Ansprüche, umfassend mindestens einen Positioniertisch (40), der unter den Stangen (2) angeordnet ist, um diese anzuheben, wobei das Steuermittel konfiguriert ist, um die Verriegelungselemente (3) in der entsprechenden Arbeitshöhe durch die folgenden Schritte zu positionieren:
- Anheben des mindestens einen Positionierungstisches (40) auf eine obere vertikale Höhe, um die Stangen (2) nach oben zu schieben;
- sobald die obere vertikale Höhe erreicht ist, Absenken des mindestens einen Positioniertisch (40) von der oberen vertikalen Höhe, so dass die Stangen (2) ebenfalls abgesenkt werden;
- während des Schrittes des Absenkens, selektives Verriegeln jeder Stange (2) durch Aktivieren der Bremse (10) durch Anlegen des zweiten Druckwertes.

6. System nach einem der vorhergehenden Ansprüche, wobei der Schieber (7) Folgendes umfasst einen Stößel (9) umfasst, der bei Betätigung des Druckgases vertikal beweglich ist, und wobei die Bremse (10) einen weiteren Stößel (13) aufweist, der bei Betätigung des Druckgases vertikal beweglich ist; wobei dieser andere Kolben insbesondere in einem Hohlraum (14) innerhalb des Schiebers (7) angeordnet ist.

7. System nach einem der vorhergehenden Ansprüche, wobei das pneumatische Betätigungsmittel mindestens einen Einlass (IN) zum Einleiten des Druckgases in das Gehäuse (8) auf mindestens einer Seite des jeweiligen Schiebers (7) und auf mindestens einer Seite der jeweiligen Bremse (10).

8. System nach einem der vorhergehenden Ansprüche, wobei die Bremse (10) eine erste elastische Einrichtung (11) aufweist, die so konfiguriert ist, die Bremse in der aktiven Konfiguration mit einer ersten elastischen Kraft entgegen dem Druckgas zu halten, wobei die erste elastische Kraft geringer ist als eine Kraft, die durch den ersten Druckwert ausgeübt wird, und größer ist als die Kräfte, die durch den zweiten Druckwert und den dritten Druckwert ausgeübt werden.

9. System nach einem der vorhergehenden Ansprüche, wobei die Bremse (10) mindestens ein keilförmiges Element (12) aufweist, das in der aktiven Konfiguration, an der Stange (2) anliegt; wobei das mindestens eine keilförmige Element (12) insbesondere an der Stange (2) mittels einer ersten elastischen Einrichtung (11) anliegt.

10. System nach einem der vorhergehenden Ansprüche, umfassend für jede der zwei oder mehr Stangen (2) zweite elastische Mittel (21) aufweist, die so konfiguriert sind, sie den jeweiligen Schieber (7) in der unteren Position mit einer zweiten elastischen Kraft gegen das Druckgas zu halten, wobei die zweite elastische Kraft geringer ist als eine Kraft, die durch den ersten Druckwert ausgeübt wird und eine durch den zweiten Druckwert ausgeübte Kraft und höher ist als eine durch den dritten Druckwert ausgeübte Kraft.

11. System nach einem der vorhergehenden Ansprüche, wobei das Verriegelungselement (3) ein Saugverriegelungselement, insbesondere einen Saugnapf, umfasst.

12. Verfahren zur Steuerung eines Systems nach einem der vorangehenden Ansprüche, wobei das Verfahren die folgenden Schritte umfasst:
- vertikales Bewegen jeder der Stangen (2);
- während des Bewegungsschritts, Steuern der Betätigungsmittel mit dem ersten Gasdruckwert, so dass jede Bremse (10) in der inaktiven Konfiguration ist, so dass jede Stange (2) durch den jeweiligen Schieber (7) freigegeben wird und sie sich vertikal bewegen kann sowohl in Bezug auf die Basis (5) als auch in Bezug auf den jeweiligen Schieber (7);
- wenn während des genannten Bewegungsschritts jede Stange (2) eine gewünschte Position erreicht, Steuern der Betätigungsmittel mit dem zweiten Gasdruckwert, so dass die jeweilige Bremse (10) in der aktiven Konfiguration ist, so dass die jeweilige Stange (2) verriegelt ist und der jeweilige Schieber (7) sich in der oberen Position befindet;
- wenn die Stangen (2) die jeweilige gewünschte Position erreicht haben, Positionieren des Positionierung des Werkstücks auf den Verriegelungselementen (3), die von den jeweiligen Stangen getragen werden; falls erforderlich, um einem Werkzeug zu ermöglichen, eine Bearbeitungsaufgabe am Werkstück (4) auszuführen ohne Beeinträchtigung eines bestimmten Verriegelungselements (3) zu ermöglichen, wobei die Betätigungsmittel, das mit dem spezifischen Verriegelungselement (3) verbunden ist, mit dem dritten Gasdruckwert, so dass sich der jeweilige Schieber (7) in die untere Position bewegt, wodurch das jeweilige Verriegelungselement (3) abgesenkt wird, um eine Störung des Werkzeugs zu vermeiden, und gleichzeitig die Betätigungsmittel die mit dem/den anderen Verriegelungselement(en) (3) verbunden sind, mit dem zweiten Druckwert zu steuern, wodurch das Werkstück weiterhin durch das/die andere(n) Verriegelungselement(e) verriegelt wird

13. Steuerungsverfahren nach Anspruch 12, das die folgenden Schritte umfasst:
- Anheben mindestens eines Positioniertisches (40) auf eine obere vertikale Höhe, so dass der mindestens ein Positioniertisch (40) die Stangen (2) nach oben drückt;
- sobald die obere vertikale Höhe erreicht ist, Absenken des mindestens einen Positioniertisch (40) von der oberen vertikalen Höhe ab, so dass die Stangen (2) ebenfalls abgesenkt werden;
- während des Schritts des Absenkens, selektives Verriegeln jeder Stange (2), sobald die Arbeitshöhe erreicht ist Stangen (2), wobei jede Stange (2) durch Aktivierung der Bremse (10) verriegelt wird durch Anlegen des zweiten Druckwertes.

## Revendications

1. Système de verrouillage de pièce à usiner (1) pour verrouiller une pièce à usiner (4) en cours d'usinage, pouvant être utilisée notamment dans un centre d'usinage, ledit système de verrouillage de pièce à usiner (1) comprenant une base (5) et deux tiges verticales (2) ou plus, chacune desdites deux tiges ou plus étant mobile verticalement par rapport à ladite base (5), ledit système de verrouillage de pièce à usiner (1) comprenant, pour chacune desdites deux tiges (2)ou plus :
- un organe de verrouillage (3) agencé sur la tige (2) respective pour verrouiller une pièce à usiner (4) en cours d'usinage ;
**caractérisé en ce que** ledit système de verrouillage de pièce à usiner (1) comprend en outre, pour chacune desdites deux tiges (2) ou plus :
- un coulisseau (7) qui est mobile verticalement par rapport à ladite base (5) entre au moins une position haute et une position basse à l'intérieur d'un logement (8) respectif obtenu dans ladite base (5) ;
- un frein (10) configuré pour adopter au moins une configuration active, dans laquelle la tige (2) respective est verrouillée sur le coulisseau (7) respectif pour être mobile verticalement avec le coulisseau (7) respectif, et au moins une configuration inactive, dans laquelle la tige (2) respective est déverrouillée du coulisseau (7) respectif pour être mobile verticalement à la fois par rapport à ladite base (5) et par rapport au coulisseau (7) respectif ;
- un moyen d'actionnement pneumatique avec un gaz sous pression configuré pour commander au moins une configuration du frein (10) respectif et une position du coulisseau (7) respectif de sorte que :
* à une première valeur de pression de gaz, le frein (10) respectif soit dans ladite configuration inactive
* à une deuxième valeur de pression de gaz, le coulisseau (7) respectif soit dans ladite position haute et le frein (10) respectif est dans ladite configuration active, de sorte que l'organe de verrouillage (3) respectif agencé sur la tige (2) respective puisse être positionné à une hauteur de travail pour verrouiller la pièce (4) ;
* à une troisième valeur de pression de gaz, le coulisseau (7) respectif soit dans ladite position basse et le frein (10) respectif est dans ladite configuration active, de sorte que l'organe de verrouillage (3) respectif agencé sur la tige (2) respective puisse être positionné à une hauteur inférieure à ladite hauteur de travail pour permettre à un outil (30) d'effectuer une tâche d'usinage sur la pièce (4) sans interférence avec l'organe de verrouillage (3) respectif.

2. Système selon la revendication 1, dans lequel ladite deuxième valeur de pression est une valeur intermédiaire entre ladite première valeur de pression et ladite troisième valeur de pression ; ladite première valeur de pression étant notamment supérieure à ladite deuxième valeur de pression ; ladite deuxième valeur de pression étant notamment supérieure à ladite troisième valeur de pression ; ladite troisième valeur de pression étant notamment la pression atmosphérique.

3. Système selon la revendication 1 ou 2, dans lequel à ladite première valeur de pression de gaz ledit coulisseau (7) est dans ladite position haute.

4. Système selon l'une des revendications précédentes, comprenant un moyen de commande configuré pour commander ledit moyen d'actionnement pneumatique desdites deux tiges (2) ou plus de sorte que, lorsqu'un outil doit effectuer une tâche d'usinage sur la pièce à usiner (4) à l'une desdites deux tiges (2) ou plus, le moyen d'actionnement pneumatique respectif fonctionne à ladite troisième valeur de pression de sorte que l'organe de verrouillage (3) respectif soit abaissé par rapport à sa hauteur de travail et l'outil peut ainsi effectuer la tâche d'usinage sans interférence avec l'organe de verrouillage (3) respectif, et de sorte que, simultanément, pour lesdites autres deux tiges (2) ou plus, le moyen d'actionnement pneumatique respectif fonctionne à ladite deuxième valeur de pression de sorte que l'organe de verrouillage (3) respectif reste positionné à sa hauteur de travail pour verrouiller la pièce à usiner (4).

5. Système selon l'une des revendications précédentes, comprenant au moins une table de positionnement (40) agencé en dessous desdites tiges (2) pour les soulever, ledit moyen de commande étant configuré pour positionner lesdits organes de verrouillage (3) à la hauteur de travail correspondante par les étapes :
- de soulèvement de ladite au moins une table de positionnement (40) à une hauteur verticale supérieure de manière à pousser les tiges (2) vers le haut ;
- une fois ladite hauteur verticale supérieure atteinte, d'abaissement de ladite au moins une table de positionnement (40) de ladite hauteur verticale supérieure de manière à ce que les tiges (2) soient également abaissées ;
- lors de l'étape d'abaissement, de verrouillage sélectif de chaque tige (2) en activant ledit frein (10) en appliquant ladite deuxième valeur de pression.

6. Système selon l'une des revendications précédentes, dans lequel ledit coulisseau (7) comprend un piston plongeur (9) mobile verticalement lors de l'actionnement dudit gaz sous pression et dans lequel ledit frein (10) comprend un autre piston plongeur (13) mobile verticalement lors de l'actionnement dudit gaz sous pression ; ledit autre piston plongeur étant agencé, notamment, dans une cavité (14) à l'intérieur dudit coulisseau (7).

7. Système selon l'une des revendications précédentes, dans lequel ledit moyen d'actionnement pneumatique comprend au moins une entrée (IN) pour amener ledit gaz sous pression dans ledit logement (8) sur au moins un côté du coulisseau (7) respectif et sur au moins un côté du frein (10) respectif.

8. Système selon l'une des revendications précédentes, dans lequel ledit frein (10) comprend un premier moyen élastique (11) configuré pour maintenir ledit frein dans ladite configuration active avec une première force élastique s'opposant audit gaz sous pression, ladite première force élastique étant inférieure à une force exercée par ladite première valeur de pression et étant supérieure aux forces exercées par ladite deuxième valeur de pression et ladite troisième valeur de pression.

9. Système selon l'une des revendications précédentes, dans lequel ledit frein (10) comprend au moins un élément en forme de coin (12) qui, dans ladite configuration active, vient en butée contre ladite tige (2) ; ledit au moins un élément en forme de coin (12) venant en butée, en particulier, contre ladite tige (2) au moyen de premier moyen élastique (11).

10. Système selon l'une des revendications précédentes, comprenant, pour chacune desdites deux tiges (2) ou plus, un deuxième moyen élastique (21) configuré pour maintenir le coulisseau (7) respectif dans ladite position basse avec une deuxième force élastique à l'encontre dudit gaz sous pression, ladite deuxième force élastique étant inférieure à une force exercée par ladite première valeur de pression et une force exercée par ladite deuxième valeur de pression et étant supérieure à une force exercée par ladite troisième valeur de pression.

11. Système selon l'une des revendications précédentes, dans lequel ledit organe de blocage (3) comprend un organe de verrouillage par aspiration, notamment une ventouse.

12. Procédé de commande d'un système selon l'une des revendications précédentes, ledit procédé comprenant les étapes :
- de déplacement vertical de chacune desdites tiges (2) ;
- au cours de ladite étape de déplacement, de commande dudit moyen d'actionnement avec ladite première valeur de pression de gaz pour que chaque frein (10) soit dans ladite configuration inactive, de sorte que chaque tige (2) soit libérée par le coulisseau (7) respectif et puisse se déplacer verticalement à la fois par rapport à la base (5) et par rapport au coulisseau (7) respectif ;
- lorsque, au cours de ladite étape de déplacement, chaque tige (2) atteint une position souhaitée, de commande dudit moyen d'actionnement avec ladite deuxième valeur de pression de gaz afin que le frein (10) respectif soit dans ladite configuration active de sorte que la tige (2) respective soit verrouillée et le coulisseau (7) respectif soit en position haute ;
- lorsque lesdites tiges (2) ont atteint la position respective souhaitée, de positionnement de la pièce à usiner sur lesdits organes de verrouillage (3) portés par les tiges respectives ;
- si nécessaire, pour permettre à un outil d'effectuer une tâche d'usinage sur la pièce à usiner (4) sans interférence avec un organe de verrouillage (3) spécifique, de commande du moyen d'actionnement associé audit organe de verrouillage (3) spécifique avec ladite troisième valeur de pression de gaz de sorte que le coulisseau (7) respectif se déplace vers la position basse, moyennant quoi l'organe de verrouillage (3) respectif est abaissé pour éviter toute interférence avec ledit outil, et en même temps de poursuite de la commande du moyen d'actionnement associé à l'autre ou aux autres organe(s) de verrouillage (3) avec ladite deuxième valeur de pression, moyennant quoi la pièce à usiner continue à être verrouillée par le ou les autre(s) organe(s) de verrouillage (3).

13. Procédé de commande selon la revendication 12, comprenant les étapes de :
- soulèvement d'au moins une table de positionnement (40) à une hauteur verticale supérieure pour que ladite au moins une table de positionnement (40) pousse les tiges vers le haut (2) ;
- une fois que ladite hauteur verticale supérieure a été atteinte, abaissement de ladite au moins une table de positionnement (40) de ladite hauteur verticale supérieure de sorte que les tiges (2) soient également abaissées ;
- lors de l'étape d'abaissement, verrouillage sélectif de chaque tige (2) une fois ladite hauteur de travail atteinte, chaque tige (2) étant verrouillée en activant ledit frein (10) en appliquant ladite deuxième valeur de pression.
